Europäisches Patentamt

European Patent Office

Office européen des brevets

(11) Veröffentlichungsnummer: **0 344 797**
**A2**

# (12) EUROPÄISCHE PATENTANMELDUNG

(21) Anmeldenummer: 89110024.0

(22) Anmeldetag: 02.06.89

(51) Int. Cl.⁴: **B01D  25/12**

(30) Priorität: 03.06.88 IT 2085788

(43) Veröffentlichungstag der Anmeldung:
06.12.89 Patentblatt  89/49

(84) Benannte Vertragsstaaten:
**AT BE CH DE ES FR GB GR IT LI LU NL SE**

(71) Anmelder: **VITALI S.p.A.**
**Via Azzeccagarbugli, 5**
**I-22053 Lecco/Acquate (Como)(IT)**

(72) Erfinder: **Vitali, Primo,**
**Via Valforca, 4**
**I-22040 Malgrate (Como)(IT)**

(74) Vertreter: Mayer, Hans Benno
de Dominicis & Mayer Piazzale Marengo 6
I-20121 Milano(IT)

(54) Dichtung für die Filterplatten einer Filterpresse zum Abfiltern flüssiger Kakaopaste.

(57) Eine Dichtung (10) fuer die Filterplatten einer Filterpresse zum Abfiltern fluessiger Kakaopaste, bestehend aus einem inneren, aus einer Vielzahl von zusammengefassten Litzen gebildetem Buendel (12), sowie einer aeusseren schlauchfoermigen Umhuellung (14), bestehend aus pflanzlichen Fasern.

FIG.4

EP 0 344 797 A2

## Dichtung fuer die Filterplatten einer Filterpresse zum Abfiltern fluessiger Kakaopaste

Die Erfindung betrifft eine Dichtung fuer die Filterplatten einer Filterpresse zum Abfiltern fluessiger Kakaopaste.

Es ist bekannt, in Pressen zum Filtern von fluessiger Kakaopaste, kreisfoermige Filterplatten einzusetzen, die auf der zur Presskammer hin gerichteten Seite eine Umfangsnut aufweisen, in der eine Dichtung angeordnet ist. Da diese Dichtungen staendig mit der fluessigen und zu filternden Kakaopaste in Beruehrung kommen, muessen derartige Dichtungen in physiologischer Hinsicht aus geeigneten Materialien bestehen. Diese Voraussetzung wird auch aufgrund der Tatsache gefordert, dass bei Zerstoerung der Dichtungen Teile der Dichtung in den Kakaokuchen fallen, aus dem sie nicht entfernt werden koennen und im Anschluss, gemeinsam mit dem Kakaokuchen vermahlen werden. Derzeitig werden solche Dichtungen aus einem Wolldocht hergestellt, der im wesentlichen runden Querschnitt aufweist und an seinen Enden vernaeht ist, um somit eine Ringdichtung zu schaffen.

Auch wenn die bekannten Wolldichtungen ihre Aufgabe zufriedenstellend loesen, weisen sie in der Praxis eine begrenzte Bestaendigkeit gegen Abnuetzung auf, deshalb ist die Standzeit dieser Dichtungen sehr begrenzt.

Aufgrund der beschraenkten Standzeit treten oft Dichtungsbrueche auf. Der dann erforderliche Austausch der Dichtungen bedingt ein Abstellen der Presse sowie einen entsprechenden Aufwand an Arbeitskraft.

Aufgabe der vorstehenden Erfindung ist es, eine Dichtung der genannten Art zu schaffen, die sich durch eine ausgezeichnete Abdichtung kennzeichnet und eine wesentlich laengere Standzeit gegenueber den bekanntgewordenen Dichtungen dieser Art hat.

Die erfindungsgemaesse Aufgabe wird mit einer Dichtung nach den Merkmalen des kennzeichnenden Teiles des Anspruchs 1 geloest.

Weitere Merkmale der erfindungsgemaessen Dichtung koennen dem kennzeichnenden Teil der Unteransprueche entnommen werden.

Mit der Dichtung nach der Erfindung werden wesentliche Vorteile erreicht.

Einmal weist das fuer die neue Dichtung vorgeschlagene Material groessere Widerstandsfaehigkeit als Wolle auf, es ist daher moeglich, Dichtungen herzustellen, die wesentlich laengere Standzeit als die bekannten Dichtungen haben. Gleichzeitig hat die vorgeschlagene Dichtung ausgezeichnete Abdichtwirkung.

Ein weiterer Vorteil der neuen Dichtung ist in der guten Verarbeitbarkeit als Gewebe, zum Beispiel in Form eines schlauchfoermigen Gewebes zu sehen. Ferner laesst sich das Material einfach zu schnurartigen Gebilden verzwirnen, was dazu fuehrt, dass Dichtungsschnuere oder Kordeln mit optimaler Festigkeit und Dichte herstellbar sind.

Von weiterem Vorteil ist die Verwendung eines schlauchartigen gewebten Strumpfes oder eines aehnlichen mit verzwirntem Faden hergestellten Gewirks, wobei der Faden aus zwei oder mehreren Faeden oder Litzen herstellbar ist. Das verwendete Material ist vom physiologischen Standpunkt ohne Bedenken verwendbar.

Aufgrund seiner groesseren Festigkeit gegenueber den bisher verwendeten Wollfaeden und durch die besondere Ausbildung der Dichtungsschnur, sind die aufgrund von Abrieb in der Kakaopaste auffindbaren Fasern in wesentlich geringerer Menge als beim Einsatz von aus Wollfasern bestehenden bekannten Dichtungen vorhanden.

Bei Verwendung von pflanzlichen Fasern, die einen verhaeltnismaessig steifen oder zaehen Aufbau aufweisen, koennen gute Dichtungsergebnisse und eine geringe Abnuetzung der Dichtung dann erzielt werden, wenn den Ausgangsfasern pflanzliche Fasern beigemischt werden, die eine weichere Struktur haben, zum Beispiel Baumwolle, Leinenfaser oder andere Produkte, wie z. B. Wollfasern.

Weitere Merkmale und Vorteile der erfindungsgemaessen Dichtung sowie der Dichtungskordel fuer die Herstellung der Dichtung koennen der folgenden Beschreibung und den Zeichnungen entnommen werden.

Die Erfindung wird nun anhand eines Ausfuehrungsbeispieles genauer beschrieben und in den Zeichnungen schematisch dargestellt:

Fig. 1 zeigt einen Querschnitt durch eine Filterplattenpresse, die mehrere Kammern aufweist und zum Abfiltern von fluessiger Kakaopaste unter Verwendung der erfindungsgemaessen Dichtung eingesetzt wird;

Fig. 2 zeigt einen Querschnitt durch eine Filterplatte der Presse gemaess Fig. 1;

Fig. 3 zeigt in vergroessertem Massstab ein Detail des Mantels der Filterplatte gemaess Fig. 2, mit uebereinander angeordneten Filterelementen und der erfindungsgemaessen Dichtung;

Fig. 4 zeigt ein Teilstueck des Dichtungsdochtes zur Erzeugung des erfindungsgemaessen Dichtungsringes; und

Fig. 5 zeigt einen Querschnitt durch den Dichtungsdocht, entsprechend der Linie V-V in Fig. 4.

Wie der Querschnittsdarstellung einer bekannten Mehrkammerfilterpresse 1 zum Abfiltern von fluessiger Kakaopaste zu entnehmen ist, wird die fluessige Kakaomasse in eine Presskammer 2 ueber Zufuehrleitungen 3 eingespeist. In jeder Presskammer sind beweglich zwei Pressplatten 4 angeordnet, die sich gegenueberliegen und eine Vielzahl von Durchgangsbohrungen 5 sowie eine Vielzahl von Filterplatten aufweisen.

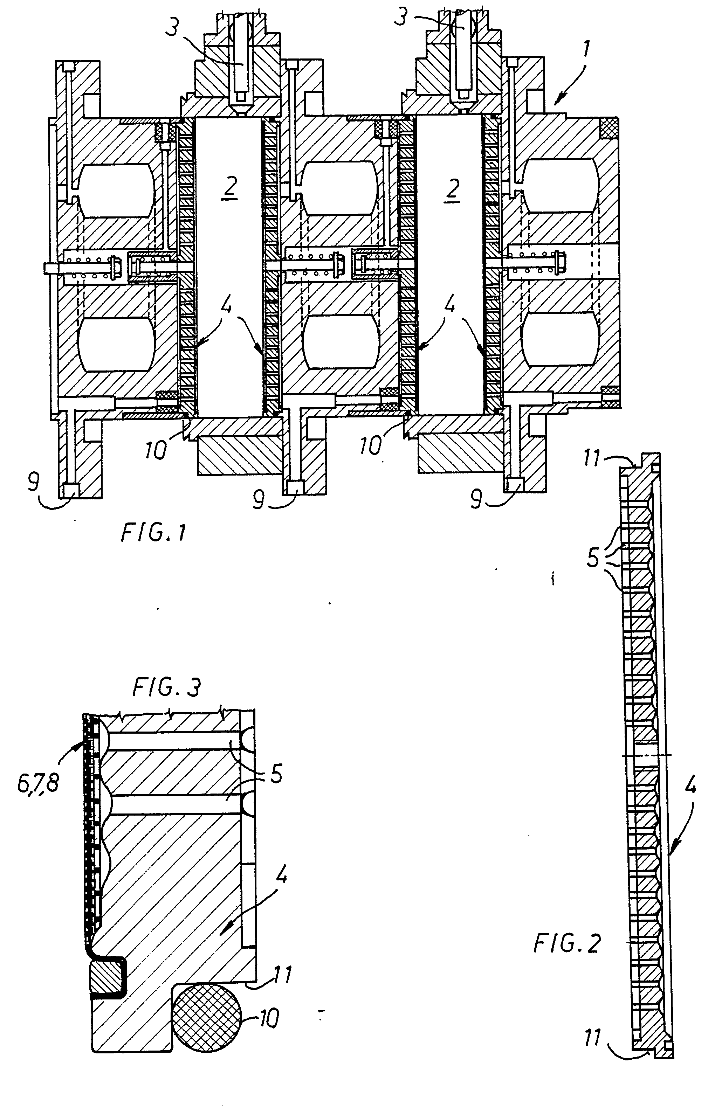

Im dargestellten Beispiel sind drei Filterplatten 6, 7 und 8 uebereinander angeordnet dargestellt. Am Ausgang dieser Filterplatten 6, 7, 8 wird die abgefilterte Kakaobutter aufgefangen und ueber eine Leitung 9 abgefoerdert. Die Abdichtung der Filterplatten 4 in der entsprechenden Presskammer 2 erfolgt ueber die vorgeschlagenen Dichtungen, die vom physiologischen Standpunkt her unbedenklich sein muessen. Diese Dichtungen 10 sind in einer Umfangsnut 11, wie der Fig. 3 entnehmbar ist, angeordnet.

Erfindungsgemaess bestehen die Dichtungen 10 aus pflanzlichen Fasern, in vorteilhafter Weise aus Weissnesselfasern.

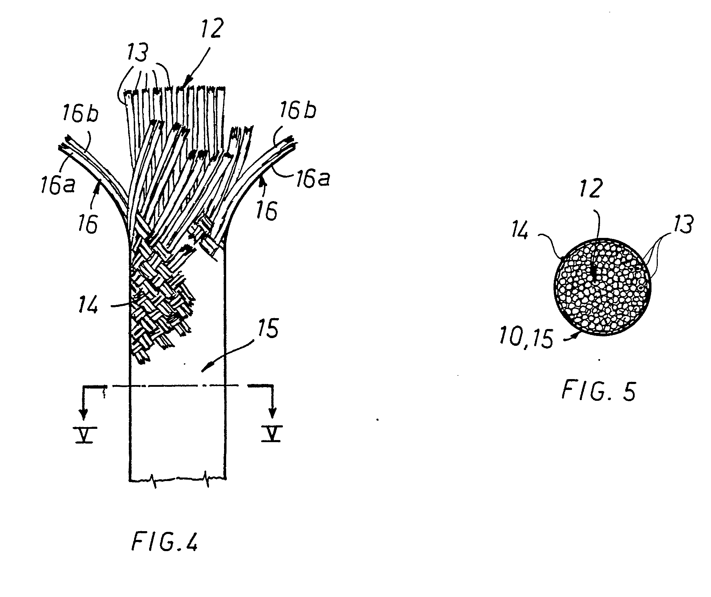

Die vorgeschlagene Dichtung 10 weist eine innere Kordel 12 auf, die aus einer Vielzahl von zusammengefassten Litzen 13 mit optimaler Dichte gebildet sind. Die Litzen 13 sind in einer aeusseren schlauchartigen Huelle 14 eingebettet. Die Huelle 14 besteht in vorteilhafter Weise aus einem Verbund, bei dem sich die Webfaeden gegenseitig ueberkreuzen, wie dies der Fig. 4 zu entnehmen ist.

Mit dieser Ausfuehrungsform wird ein besonders kompakter und widerstandsfaehiger Dichtungsdocht 15 hergestellt, der ausgezeichnete Abdichtwirkungen aufweist.

Die Vorsehung einer aeusseren Umhuellung 14, die in vorteilhafter Weise aus sich kreuzenden Faeden besteht, wobei sich eine Vielzahl von Faeden ueberkreuzt, fuehrt zu hcher Festigkeit und dennoch, aufgrund der Reibwirkung auf der Mantelflaeche der Presskammer 2, gelangt eine aeusserst geringe Fasermenge in die Kakaopaste.

Dieses Merkmal, in Verbindung mit der Festigkeit der pflanzlichen Fasern, zum Beispiel Weissnesselfasern, ermoeglicht es, die erwuenschte hohe Standzeit fuer die Dichtung zu erreichen.

Bei Verwendung verhaeltnismaessig steifer und harter pflanzlicher Fasern, zum Beispiel Agavefasern, wurden besonders gute Ergebnisse dann erzielt, wenn diese recht steifen Fasern mit einer gewissen Menge weicherer Fasern, zum Beispiel Baumwollfasern, Leinenfasern oder aehnlichen Erzeugnissen, vermischt wurden oder in Alternative, dieser Fasermischung Wollfasern beigegeben wurden. Bei Verwendung einer aus Mischfasern bestehenden Dichtung verleihen die weicheren Fasern dem Dichtungsdocht eine bessere Elastizitaet, die Dichtung behaelt jedoch unveraendert die verbesserten Merkmale hinsichtlich langer Standzeit und bester Abdichtung bei.

Der vorangegangenen Beschreibung der erfindungsgemaessen Dichtung kann entnommen werden, dass durch den Erfindungsvorschlag die erfindungsgemaesse Aufgabe bestens geloest wird und weitere wesentliche Vorteile erzielt werden.

Obwohl die Erfindung am Beispiel eines Dichtungsdochtes beschrieben wurde, bei dem einzelne Litzen zusammengefasst wurden, welche in einer aeusseren Umhuellung untergebracht sind, die aus einem Gewebe von sich kreuzenden Fasern besteht, bleibt erfindungsgemaess durchaus die Moeglichkeit, die innenliegenden Litzen in jeglicher Formgestalt oder Kombination vorzusehen. Es ist z. B. moeglich und vorteilhaft, die Litzen zur Bildung der inneren Kordel spiralfoermig, und zwar mit grosser Steigung anzuordnen. Es besteht ferner die Moeglichkeit, fuer die aeussere Umhuellung jegliche geeignete Webart auszuwaehlen. Weiter ist Gegenstand der Erfindung, andersartige Pflanzenfasern zu verwenden, sofern diese zur Loesung der erfindungsgemaessen Aufgabe beitragen. Zum Beispiel koennen Agavefasern verwendet werden. Diese koennen allein oder in Kombination mit anderen, weicheren Fasern eingesetzt werden.

In der Praxis koennen auch die in der Umhuellung liegenden Litzen, ihr Querschnitt sowie ihre Aussenabmessung, ihr Durchmesser sowie ihre Dichte beliebig gewaehlt werden, ohne deshalb aus dem Schutzumfang der vorstehenden Erfindung auszutreten.

Bei dem dargestellten Ausfuehrungsbeispiel ist jeder Faden 16 des Gewebes zur Herstellung der schlauchartigen Umhuellung 14 in vorteilhafter Weise aus einem verzwirnten Faden gebildet, der aus zwei oder mehreren Faeden oder Litzen besteht. Im dargestellten Beispiel sind zwei Faeden oder Litzen 16a und 16b dargestellt.

Alle Merkmale die der Beschreibung, den Patentanspruechen und den Zeichnungen entnommen werden koennen, sind als wesentlich fuer die vorstehende Erfindung anzusehen, sowohl einzeln als auch in Kombination untereinander.

## Ansprüche

1. Dichtung fuer Filterplatten einer Filterpresse zum Abfiltern fluessiger Kakaopaste, **dadurch gekennzeichnet**, dass sie eine innere Kordel (12), bestehend aus inneren Litzen (13), und eine aeussere schlauchfoermige Umhuellung (14) umfasst und sowohl die Litzen (13) als auch die aeussere schlauchfoermige Umhuellung (14) aus pflanzlichen Fasern bestehen.

2. Dichtung, nach Patentanspruch 1, **dadurch gekennzeichnet**, dass die Litzen (13) und die aeussere Umhuellung (14) aus Weissnesselfasern bestehen.

3. Dichtung, nach Patentanspruch 1 und 2, **dadurch gekennzeichnet**, dass die Litzen (13) zur Bildung der inneren Kordel (12) gruppenartig zueinander angeordnet sind, um eine bestimmte Dichte fuer die innere Kordel (12) oder den Dichtungsdocht (15) zu erhalten.

4. Dichtung, nach Patentanspruch 3, **dadurch gekennzeichnet**, dass die Litzen (13) zur Bildung der inneren Kordel (12) spiralfoermig, in vorteilhafter Weise mit grosser Steigung angeordnet sind.

5. Dichtung, nach einem oder mehreren der Ansprueche 1 bis 4, **dadurch gekennzeichnet**, dass die aeussere schlauchartige Umhuellung (14) aus einem Gewebe oder einem Gewirke, aus sich kreuzenden Fasern besteht.

6. Dichtung, nach Anspruch 5, **dadurch gekennzeichnet**, dass in der gewebten oder gewirkten schlauchfoermigen Umhuellung (14) verzwirnte Faeden (16) vorgesehen sind, die aus mehreren Faeden oder Litzen (16a, 16b) gebildet sind. 7. Dichtung, nach Anspruch 1 bis 6, **dadurch gekennzeichnet**, dass bei Verwendung pflanzlicher Fasern mit steifem oder hartem Aufbau, diesen weichere pflanzliche Fasern, zum Beispiel Baumwolle, Leinen oder aehnliches Material beigemischt sind.

8. Dichtung, nach Patentanspruch 7, **dadurch gekennzeichnet**, dass den pflanzlichen Fasern tierische Fasern, wie z. B. Wollfasern, beigemischt sind.

9. Dichtungsdocht zur Herstellung von ringfoermigen Dichtungen, gemaess Anspruch 1 bis 8, **dadurch gekennzeichnet**, dass der Docht einen Aufbau gemaess den Anspruechen 1-8 aufweist.

FIG.1

FIG.3

FIG.2

FIG.4

FIG. 5